Europäisches Patentamt

European Patent Office

Office européen des brevets

(11) Numéro de publication: **0 254 613 B1**

# FASCICULE DE BREVET EUROPEEN

(45) Date de publication de fascicule du brevet:
27.03.91

(51) Int. Cl.⁵: **G01C 17/30**

(21) Numéro de dépôt: **87401505.0**

(22) Date de dépôt: **30.06.87**

(54) **Noyau pour compas magnétique.**

(30) Priorité: **04.07.86 FR 8609764**

(43) Date de publication de la demande:
**27.01.88 Bulletin 88/04**

(45) Mention de la délivrance du brevet:
**27.03.91 Bulletin 91/13**

(84) Etats contractants désignés:
**DE GB IT**

(56) Documents cités:
**DE-C- 447 213**

**IEEE TRANSACTIONS ON MAGNETICS, vol. MAG-7, no. 4, décembre 1971, pages 899-905, New York, US; Y. OHBUCHI et al.: "Measurement of flux distribution in toroidal and multiaperture cores"**

(73) Titulaire: **THOMSON-CSF**
**51, Esplanade du Général de Gaulle**
**F-92800 Puteaux(FR)**

(72) Inventeur: **Posseme, Gilles**
**THOMSON-CSF SCPI 19, avenue de Messine**
**F-75008 Paris(FR)**
Inventeur: **Cheminant, Pierre**
**THOMSON-CSF SCPI 19, avenue de Messine**
**F-75008 Paris(FR)**

(74) Mandataire: **Desperrier, Jean-Louis et al**
**THOMSON-CSF SCPI**
**F-92045 PARIS LA DEFENSE CEDEX 67(FR)**

Rank Xerox (UK) Business Services

## Description

La présente invention se rapporte aux noyaux utilisés dans les compas magnétique du type comprenant des magnétomètres à saturation.

L'utilisation de l'induction du champ terrestre dans un noyau en fer en forme de disque entouré de bobinages est notamment décrite dans le brevet allemand n° 4.47 213 du 18 juillet 1927. A cette époque on utilisait des disques pleins relativement épais comportant éventuellement des fentes, et les moyens de détection, compte tenu des possibilités restreintes de la technique électronique d'alors, comprenaient un système de balais et de collecteurs reliés aux bobinages qui étaient amenés à tourner par rapport au support du compas.

Il est connu aujourd'hui pour fabriquer un magnétomètre, du type dit "flux-gate", utilisable comme compas magnétique, de soumettre un circuit magnétique appelé noyau à un champ magnétique alternatif produit par un bobinage d'excitation qui porte ce noyau à saturation. Un bobinage de détection placé autour de l'ensemble circuit magnétique - bobinage d'excitation permet d'obtenir le signal de mesure.

Le champ extérieur, terrestre dans le cas d'un compas, qui se superpose au champ d'excitation, entraîne une dissymétrie des signaux détectés par le bobinage de détection, notamment une dissymétrie de l'amplitude des harmoniques pairs de la fréquence d'excitation. La mesure se fait généralement en détectant l'harmonique 2 du signal délivré par le bobinage de détection. Un tel magnétomètre est par exemple décrit dans le brevet français 1 388 894 déposé le 31 décembre 1963.

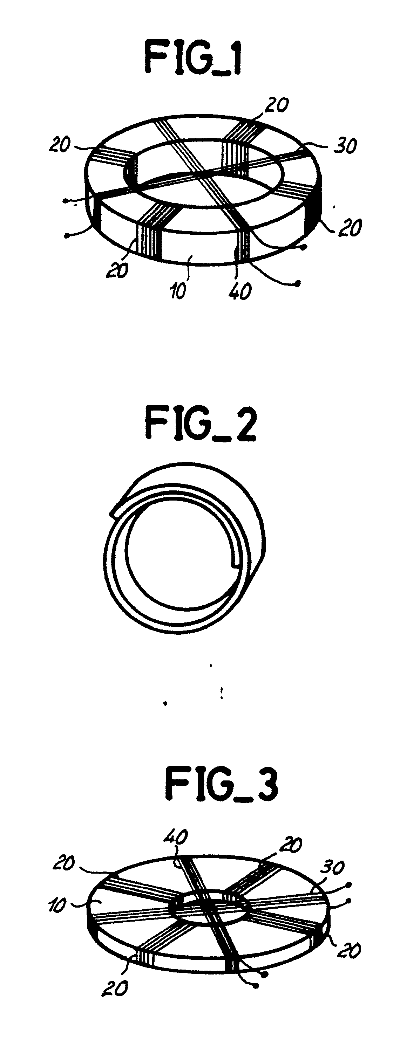

On a représenté sur la figure 1 un magnétomètre formant compas magnétique, qui comporte un noyau et des bobinages permettant de mesurer simultanément les deux composantes orthogonales du champ terrestre dans le plan horizontal.

Ce dispositif comprend un circuit magnétique torique 10. Quatre bobinages d'excitation 20 sont bobinés sur ce tore à 90° les uns des autres. Ces bobinages sont tels que les bobines passent par l'intérieur du tore.

Deux bobinages de détection 30 et 40 sont bobinés orthogonalement entre eux et à 45° par rapport aux bobinages d'excitation de telle manière qu'ils entourent l'anneau torique sans passer par son trou intérieur.

En l'absence de champ extérieur, le flux sortant du tore est nul et il n'y a pas de signal détecté. En présence d'un champ extérieur, les deux bobines de détection sont traversées par un flux modulé par le noyau et les flux coupés permettent, grâce au fait que le noyau est porté à saturation à une fréquence f, d'obtenir deux signaux de détection à chaque demi-alternance de f.

Ces deux signaux sont l'un proportionnel à $\cos\theta_0$ et l'autre à $\sin\theta_0$, si $\theta_0$ est la direction de l'axe de l'une des bobines par rapport à l'axe du champ magnétique terrestre.

Pour obtenir un tel noyau torique on enroule généralement un ruban en matériau magnétique à haute perméabilité, tel que le ferronickel, le Permalloy ou le numétal, de la manière représentée en figure 2.

Ce mode de réalisation du noyau magnétique présente de nombreux inconvénients:

Sous l'effet des contraintes mécaniques, même faibles, auxquelles le matériau est soumis lors de l'enroulement, il perd la plus grand partie de ses propriétés magnétiques. Pour récupérer ces propriétés, il faut alors le soumettre à un recuit, mais cette opération le rend fragile.

Par ailleurs un tel enroulement n'est manifestement pas homogène à cause des extrémités du ruban, et ceci provoque l'apparition d'une anisotropie qui perturbe les mesures. D'autre part le volume occupé par le noyau n'est pas optimal pour intégrer le dispositif dans un système flottant, comme on le fait souvent pour le suspendre par flottaison à la surface d'un liquide.

En ce qui concerne les inconvénients dus au matériau lui-même, il est connu d'utiliser un matériau amorphe qui présente des qualités mécaniques et magnétiques supérieures. C'est ainsi que l'on a décrit dans le brevet n° 83 10497 déposé le 24 juin 1983 FR-A-2547927 un noyau magnétique saturable formé d'un ruban de matériau amorphe enroulé à l'intérieur d'un tube en céramique. Un tel matériau présente en particulier l'avantage d'avoir un très faible coefficient de magnétostriction, ce qui permet de l'utiliser et de le manipuler sans boîtier de protection. Toutefois les inconvénients dus à l'anisotropie et à la forme tubulaire de ce noyau demeurent.

Pour pallier ces inconvénients, l'invention propose de réaliser le noyau magnétique sous la forme d'un tore plat obtenu en découpant au moins une rondelle dans un ruban de matériau amorphe magnétique.

D'autres particularités et avantages de l'invention apparaîtront clairement dans la description suivante présentée à titre d'exemple non limitatif en regard des figures annexées qui représentent :

- la figure 1, une vue en perspective cavalière d'un magnétomètre selon l'art connu ;

- la figure 2, une vue en perspective cavalière d'un noyau de magnétomètre selon l'art connu ;

- la figure 3, une vue en perspective cavalière d'un magnétomètre selon l'invention.

Le magnétomètre selon l'invention représenté en figure 3 comporte, comme dans l'art antérieur, quatre bobines d'excitation 20 et deux bobines de détection 30 placées sur un noyau torique 10 selon la même disposition que dans la figure 1.

Toutefois le noyau 10 est obtenu en découpant dans un ruban plat de matériau magnétique amorphe une rondelle plate dont l'épaisseur est considérablement plus petite, d'au moins un ordre de grandeur, que le diamètre extérieur.

On arrive ainsi à obtenir un noyau, et donc un magnétomètre, très plat, ce qui facilite grandement sa stabilité lors d'une suspension par flottaison. Ceci est obtenu tout en ayant un volume de matériau magnétique du noyau au moins égal à celui des réalisations selon l'art antérieur, et donc la sensibilité est au moins équivalente.

Dans une variante de réalisation on empile plusieurs rondelles pour augmenter le volume de matériau magnétique, et donc la sensibilité du magnétomètre, tout en gardant une forme de tore sensiblement très plat.

Bien évidemment dans ces deux réalisations il n'y a pas d'anisotropie due au noyau puisque celui-ci est homogène et strictement de révolution autour d'un axe vertical.

Pour découper la ou les rondelles on peut, selon l'invention, procéder à une découpe chimique d'un matériau amorphe disponible sous forme de ruban. Pour cela on attaque le matériau par un agent chimique à travers un masque selon une technique connue. Ce masque est de préférence prévu de manière à pouvoir découper plusieurs rondelles simultanément. Un tel procédé de découpe minimise les contraintes et garantit une bonne isotropie du circuit magnétique.

Selon un exemple de réalisation on a réalisé un tel circuit magnétique pour un compas en découpant chimiquement dans un matériau à base de cobalt, commercialisé sous le nom de Vitrovac 6025X, une rondelle d'une épaisseur de 25µ, d'un diamètre extérieur de 25 mm et d'un diamètre intérieur de 18 mm.

Le magnétomètre ainsi obtenu avait un encombrement réduit, une très bonne définition du plan de mesure, puisque celui-ci était dans l'épaisseur très faible de la rondelle, pas de collage ni de soudage d'extrémités en raison de l'absence de celles-ci, et une industrialisation facile et donc peu coûteuse.

## Revendications

1. Compas magnétique du type à saturation comprenant un noyau torique muni de bobinages formés de 4 bobines d'excitation (20) bobinées à 90° sur le noyau en passant par le trou central et de 2 bobines de détection (30) bobinées orthogonalement entre elles et à 45° par rapport aux bobinages d'excitation en entourant la rondelle sans passer par le trou central, caractérisé en ce que ledit noyau torique a une forme plate et est formé d'un matériau amorphe magnétique dont l'épaisseur est au plus égales à 1/1000ème du diamètre extérieur.

2. Compas magnétique selon la revendication 1, caractérisé en ce que ledit tore plat est en Vitrovax 6025X d'une épaisseur de 25µ, d'un diamètre extérieur de 25mm et d'un diamètre intérieur de 18 mm.

## Claims

1. A saturation type magnetic compass comprising a toroidal core provided with windings formed by four exciting coils (20) wound at 90° on the core and extending through the central hole and by two detecting coils (30) wound with a right angle between them and at 45° in relation to the exciting windings and surrounding the disk without extending through the central hole, characterized in that the said toroidal core has a flat form and is made of a magnetic, amorphous material whose thickness is at the most equal to 1/1000th of the outside diameter.

2. The magnetic compass as claimed in claim 1, characterized in that the said flat torus is manufactured of Vitrovax 6025X with a thickness of 25 µ, with an outside diameter of 25mm and with an inside diameter of 18 mm.

## Ansprüche

1. Magnetkompaß vom Typ mit Sättigung, der einen ringförmigen Kern umfaßt, welcher mit Wicklungen versehen ist, die aus vier Erregerspulen (20), die unter 90° auf den Kern gewickelt sind, wobei sie das zentrale Loch durchqueren, und aus zwei Detektionsspulen (30) bestehen, die zueinander senkrecht und in Bezug auf die Erregungsspulen unter 45° gewickelt sind, wobei sie die Ringscheibe umgeben, ohne das zentrale Loch zu durchlaufen, dadurch gekennzeichnet, daß der genannte ringförmige Kern eine flache Form aufweist und aus einem magnetischen, amorphen Material gebildet ist, dessen Dicke höchstens 1/1000-tel des äußeren Durchmessers entspricht.

2. Magnetkompaß nach Anspruch 1, dadurch gekennzeichnet, daß der genannte flache Torus aus Vitrovax 6025X mit einer Dicke von 25µ, einem äußeren Durchmesser von 25mm und einem inneren Durchmesser von 18mm besteht.

# FIG_1

# FIG_2

# FIG_3